# FASCICULE DE BREVET EUROPEEN

(11) **EP 1 021 016 B1**
(45) Date de publication et mention de la délivrance du brevet: **19.10.2005**
(21) Numéro de dépôt: 00400024.6
(22) Date de dépôt: 05.01.2000
(51) Int. Cl.: H04L 12/26, H04L 12/24

(54) **Dispositif de discrimination de défauts dans une liaison louée numérique**
Gerät zur Unterscheidung von Fehlern auf einer digitalen Mietleitung
Device for discriminating faults on a digital leased line

(30) Priorité: 11.01.1999 FR 9900259
(43) Date de publication de la demande: 19.07.2000
(73) Titulaire: Sagem SA, 75116 Paris (FR)
(72) Inventeur: Journel, Jacques, 78380 Bougival (FR)
(74) Mandataire: Cabinet Martinet & Lapoux

(56) Documents cités:
- JP-A- 4 023 537
- US-A- 5 461 628
- US-A- 5 768 501

## Description

La présente invention concerne la discrimination de défauts entre deux ou plusieurs équipements reliés en cascade sur une ligne de télécommunication et signalant des défauts de fonctionnement au moyen de signaux d'indication d'alarme identiques. Plus particulièrement, elle concerne la discrimination de défauts pouvant intervenir au niveau d'un équipement terminal de traitement de données (ETTD) ou d'un équipement de terminaison de circuit de données (ETCD) localisés à une extrémité d'une ligne louée numérique.

Le document US-A-5 461 628 divulgue un système de discrimation de défauts dans un réseau mais ce système ne permet pas la discrimination de defauts dans des équipements en cascade qui utilisent des signaux d'alarme identiques.

Particulièrement pour une liaison louée numérique dont le débit utile est égal au débit théorique, l'opérateur, le loueur de la liaison numérique, ne dispose pas de surdébit pour superviser la liaison. Les extrémités de la liaison sont sous la responsabilité du client, l'utilisateur, tandis que la liaison elle-même, c'est-à-dire le long tronçon entre les équipements aux extrémités de la liaison, est sous la responsabilité de l'opérateur, le loueur.

Lorsqu'un défaut de fonctionnement intervient indifféremment dans un équipement terminal sous la responsabilité de l'utilisateur ou dans un autre équipement de la liaison, le défaut se traduit par un même signal d'indication d'alarme qui est émis par l'équipement qui a détecté le défaut. Ce signal d'alarme est alors détecté dans un centre de supervision de l'opérateur surveillant la liaison. En réponse au signal d'indication d'alarme détecté, l'opérateur est alors incapable de différencier un défaut provenant d'un équipement sous sa responsabilité et un défaut provenant d'un équipement sous la responsabilité de l'utilisateur. L'opérateur commence par tester ses équipements pour vérifier si ceux-ci sont en bon état de fonctionnement alors que le défaut peut provenir d'un équipement ETTD sous la responsabilité de l'utilisateur.

L'invention vise à remédier à cet inconvénient, c'est-à-dire à reconnaître l'origine d'un signal d'indication d'alarme, et plus précisément à fournir un dispositif qui sert à discriminer des défauts résultant de dysfonctionnements dans un tronçon d'extrémité de liaison sous la responsabilité de l'utilisateur et de dysfonctionnements dans le tronçon central de la liaison sous la responsabilité de l'opérateur.

A cette fin, un dispositif pour discriminer des défauts de fonctionnement qui sont signalés respectivement par des signaux d'indication d'alarme identiques transmis dans une ligne de télécommunications, telle qu'une liaison louée numérique, depuis un premier équipement, tel qu'un équipement terminal de traitement de données, à travers un deuxième équipement, tel qu'un équipement de terminaison de circuit de données, et depuis le deuxième équipement connecté à la ligne de télécommunication, est caractérisé en ce que le dispositif est interconnecté entre le premier équipement et le deuxième équipement et comprend un moyen pour remplacer le signal d'indication d'alarme transmis depuis le premier équipement par un signal d'alarme qui est différent du signal d'indication d'alarme et d'un signal de données transmis par le premier équipement et qui est transmis dans la ligne de télécommunication à travers le deuxième équipement.

Le signal d'alarme remplaçant le signal d'indication d'alarme provenant du premier équipement est reconnu sans ambiguïté dans le centre de supervision de la ligne de télécommunication comme le signalement d'un défaut dans le premier équipement. Tout signal d'indication d'alarme détecté directement dans le centre de supervision est reconnu comme le signalement d'un défaut dans la ligne de télécommunication pouvant provenir du deuxième équipement, ou plus généralement de tout équipement en aval du deuxième équipement situé entre ce deuxième équipement et le centre de supervision et relatif à la liaison entre le deuxième équipement et le centre de supervision.

Le centre de supervision étant supposé être sensiblement au milieu de la liaison, la surveillance de la liaison entre les premiers équipements distants aux extrémités de la liaison reste contrôlée par l'opérateur dans le centre de supervision. Les tronçons de la liaison de part et d'autre du centre de supervision depuis les premiers équipements distants sont supervisés indépendamment par le centre de supervision.

Le dispositif de discrimination selon l'invention est installé très facilement en coupure à la jonction entre le premier équipement et le deuxième équipement, et est indépendant du type des équipements.

En particulier dans un circuit d'émission du dispositif, le moyen pour remplacer comprend un détecteur pour détecter le signal d'indication d'alarme transmis depuis le premier équipement, un embrouilleur pour embrouiller le signal d'indication d'alarme détecté en des séquences d'alarme embrouillées constituant le signal d'alarme, et un moyen de commutation commandé par le détecteur ayant un premier état à travers lequel un signal de données est transmis par le premier équipement vers le deuxième équipement et un deuxième état à travers lequel les séquences d'indication d'alarme embrouillées sont transmises par l'embrouilleur vers le deuxième équipement tant que le signal d'indication d'alarme est détecté.

Selon un autre aspect de l'invention, le dispositif de discrimination signale un manque de signal dans la jonction entre les premier et deuxième équipements par un signal de manque de signal différent d'un signal d'indication d'alarme afin que l'opérateur attribue un manque de signal au tronçon sous la responsabilité de l'utilisateur.

Dans ce cas le dispositif comprend un moyen pour transmettre vers la ligne de télécommunication à travers le deuxième équipement un signal indiquant le manque de signal qui ne se retrouve pas dans le signal de données, tant qu'il y a un manque de signal en sortie du premier équipement.

En particulier, le moyen pour transmettre comprend un deuxième détecteur pour détecter un manque de signal en sortie du premier équipement, et un générateur pour générer des séquences de manque de signal qui sont embrouillées par l'embrouilleur en des séquences de manque de signal embrouillées transmises vers le deuxième équipement à travers le moyen de commutation audit deuxième état tant que le manque de signal est détecté.

Lorsque la ligne de télécommunication est bidirectionnelle, c'est-à-dire lorsque les liaisons entre les premiers équipements distants est bidirectionnelle, le dispositif comprend, dans un circuit de réception, un deuxième moyen pour remplacer un deuxième signal d'alarme reçu au moins à travers la ligne de télécommunication et le deuxième équipement par un deuxième signal d'indication d'alarme transmis au premier équipement. Le deuxième signal d'alarme provient du remplacement d'un signal d'indication d'alarme transmis par le premier équipement distant de la liaison, lequel remplacement est effectué dans un dispositif de discrimination selon l'invention, dans la jonction devant le premier équipement distant.

En particulier, le deuxième moyen pour remplacer comprend un désembrouilleur pour désembrouiller des deuxièmes séquences d'indication d'alarme embrouillées constituant le deuxième signal d'alarme en un deuxième signal d'indication d'alarme, un troisième détecteur pour détecter le deuxième signal d'indication d'alarme, et un deuxième moyen de commutation commandé par le troisième détecteur ayant un premier état à travers lequel un signal de données reçu au moins à travers la ligne de télécommunication et le deuxième équipement est transmis vers le premier équipement et un deuxième état à travers lequel le deuxième signal d'indication d'alarme détecté est transmis vers le premier équipement, ou à travers lequel le deuxième signal d'indication d'alarme reproduit dans un générateur de signal d'indication d'alarme est transmis vers le premier équipement, tant que le deuxième signal d'indication d'alarme est détecté.

Un manque de signal dans la jonction devant le premier équipement distant doit être signalé par un signal d'indication d'alarme au premier équipement considéré, comme pour un signal d'indication d'alarme provenant du premier équipement distant, afin de conserver les mêmes conditions de signalement d'alarme au premier équipement que selon la technique antérieure. Dans le dispositif de l'invention est alors prévu un troisième moyen pour remplacer un deuxième signal de manque de signal reçu au moins à travers la ligne de télécommunication et le deuxième équipement par un deuxième signal d'indication d'alarme transmis au premier équipement terminal.

De préférence, le troisième moyen pour remplacer comprend un quatrième détecteur pour détecter des deuxièmes séquences de manque de signal produites par le désembrouilleur en réponse à des deuxièmes séquences de manque de signal embrouillées constituant le deuxième signal de manque de signal, et un générateur pour générer le deuxième signal d'indication d'alarme transmis vers le premier équipement à travers le deuxième moyen de commutation audit deuxième état tant que des deuxièmes séquences de manque de signal sont détectées.

Chaque séquence de manque de signal comprend par exemple une suite alternée de bits à un premier état en nombre prédéterminé et de bits à un deuxième état en nombre prédéterminé.

Comme cela a déjà été évoqué et selon une réalisation préférée décrite en détail dans la suite de la description, le premier équipement est un équipement terminal de traitement de données, le deuxième équipement est un équipement de terminaison de circuit de données, dit également terminal numérique de ligne (TNL), et la ligne de télécommunication est une ligne de transmission numérique.

Pour vérifier qu'un signal d'indication d'alarme détecté dans le centre de supervision de l'opérateur résulte d'un défaut du deuxième équipement, ou d'un autre équipement entre celui-ci et le centre de supervision dans la liaison, le centre de supervision transmet une séquence prédéterminée vers le deuxième équipement afin de boucler l'extrémité de la ligne du côté de tronçon de liaison sous la responsabilité de l'opérateur et tester celle-ci. Dans ce cas, le dispositif de discrimination comprend un moyen pour détecter une séquence prédéterminée reçue depuis la sortie du deuxième équipement, et un moyen pour boucler la sortie et l'entrée du deuxième équipement en réponse à la séquence prédéterminée détectée.

En outre, un moyen de bouclage commandé localement peut être prévu pour boucler soit la sortie et l'entrée du deuxième équipement, soit la sortie et l'entrée du premier équipement, les premier et deuxième équipements étant ainsi déconnectés.

Chaque bouclage dans le dispositif de discrimination de l'invention peut être effectué du côté de l'équipement de terminaison ou du côté de l'équipement terminal selon l'insertion souhaitée des moyens pour boucler. Un moyen dans le circuit de réception du dispositif génère un deuxième signal d'indication d'alarme transmis vers le premier équipement lorsque le moyen de bouclage boucle la sortie et l'entrée du deuxième équipement afin d'avertir le premier équipement que la liaison louée n'est pas disponible pour transmettre des signaux de données. Un autre moyen dans le circuit d'émission du dispositif génère une séquence prédéterminée dans la ligne de télécommunication à travers le deuxième équipement lorsque le moyen de bouclage boucle la sortie et l'entrée du premier équipement afin d'avertir le premier équipement distant à l'autre extrémité de la liaison que la liaison n'est plus disponible pour transmettre des signaux de données.

L'invention concerne également un centre de supervision pour superviser une ligne de télécommunication équipée d'un dispositif interconnecté entre un premier équipement et un deuxième équipement connecté à la ligne de télécommunication pour discriminer des défauts de fonctionnement conforme à l'invention. Le centre de supervision est caractérisé en ce qu'il comprend un premier moyen pour détecter un signal d'indication d'alarme susceptible d'être transmis depuis le deuxième équipement, et un deuxième moyen pour détecter un signal d'alarme différent du signal d'indication d'alarme et transmis par ledit dispositif en remplacement d'un signal d'indication d'alarme transmis depuis le premier équipement. En correspondance avec l'embrouilleur dans le dispositif de discrimination de défauts, le moyen pour détecter dans le centre de supervision comprend un désembrouilleur pour désembrouiller tout signal reçu de la ligne de télécommunication en un signal désembrouillé, et un détecteur pour détecter un signal d'indication d'alarme dans le signal désembrouillé.

Le centre de supervision comprend également un moyen pour détecter un signal de manque de signal transmis par ledit dispositif tant qu'il y a un manque de signal en sortie du premier équipement. En particulier, un deuxième détecteur détecte dans le signal désembrouillé des séquences de manque de signal générées et embrouillées dans ledit dispositif tant qu'il y a un manque de signal en sortie du premier équipement.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est un bloc-diagramme schématique d'une liaison de télécommunication à travers un réseau de liaisons louées numériques et entre deux équipements terminaux reliés à des dispositifs de discrimination de défauts selon l'invention; et
- la figure 2 est un bloc-diagramme détaillé d'un dispositif de discrimination de défauts selon l'invention, des commutateurs dans ce dispositif étant illustrés en état normal de transmission/réception de signaux de données.

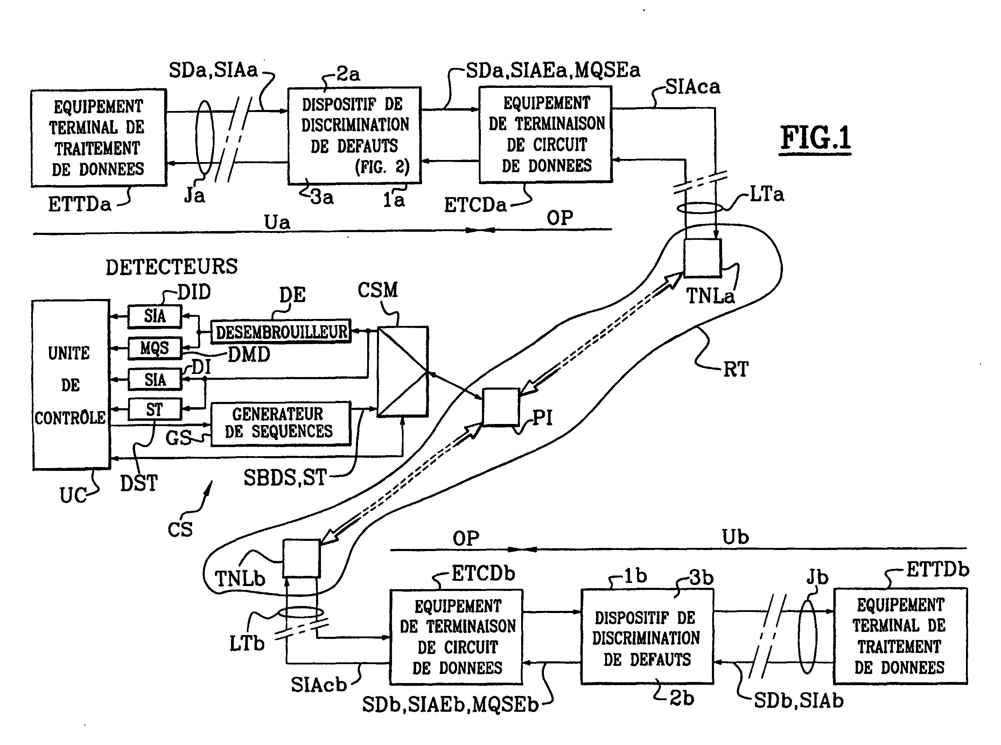

Une liaison téléphonique bidirectionnelle de type numérique entre deux équipements terminaux de traitement de données ETTTa et ETTTb comprend essentiellement trois tronçons Ua, OP et Ub, comme montré à la figure 1.

Un premier tronçon Ua comprend chez un client utilisateur l'équipement terminal ETTDa et une jonction Ja depuis cet équipement terminal vers un équipement de terminaison de circuit de données ETCDa, dit également terminal numérique de ligne (TNL). Un deuxième tronçon OP incomparablement plus long que les premier et troisième tronçons est sous la responsabilité d'un opérateur et s'étend depuis l'équipement de terminaison de circuit de données ETCDa devant la jonction de premier utilisateur Ja jusqu'à un autre équipement de terminaison de circuit de données ETCDb, dit également terminal numérique de ligne (TNL), constituant la frontière avec le troisième tronçon Ub. Le troisième tronçon est du même type que le premier tronçon et est installé chez un "deuxième" utilisateur. Le tronçon Ub comprend une jonction Jb entre l'équipement de terminaison ETCDb et un équipement terminal de traitement de données ETTDb chez le deuxième utilisateur.

Les équipements terminaux ETTTa et ETTTb transmettent des signaux de données SDa et SDb l'un vers l'autre et sont des installations de télécommunication d'utilisateur comprenant par exemple un ou plusieurs micro-ordinateurs, ou un serveur desservant un réseau local, ou encore un autocommutateur numérique privé. Les équipements de terminaison de circuit de données ETCDa et ETCDb sont par exemple des multiplexeurs.

Le deuxième tronçon OP sous la responsabilité de l'opérateur est constitué essentiellement par un réseau de télécommunication RT pour liaisons louées numériques synchrones ou plésiochrones de données, câblé et/ou hertzien et/ou avec des fibres optiques, les deux équipements de terminaison ETCDa et ETCDb, et deux lignes numériques d'utilisateur LTa et LTb reliant les équipements de terminaison ETCDa et ETCDb respectivement à des terminaux numériques de ligne TNLa et TNLb constituant des points d'accès au réseau de télécommunication RT.

A titre d'exemple, la liaison entre les équipements terminaux ETTDa et ETTDb est une liaison numérique synchrone spécialisée louée par l'opérateur OP spécialement à un utilisateur, qui peut être un prestataire de services, et à travers laquelle les équipements terminaux ETTDa et ETTDb communiquent en permanence des signaux de données SDa et SDb. Par exemple, le débit garanti pour cette liaison particulièrement à travers les jonctions Ja et Jb et les lignes téléphoniques LTa et LTb est de 2048 kbit/s, selon la recommandation G.703 de l'Union Internationale des Télécommunications UIT, Genève 1991. Les transmissions des signaux de données dans les jonctions Ja et Jb sont numériques, c'est-à-dire par exemple en code bipolaire à haute densité d'ordre 3 HDB3. Les jonctions Ja et Jb et les lignes LTa et LTb sont bidirectionnelles et respectivement à quatre fils, ou à deux fibres optiques par exemple.

Plusieurs centres de supervision supervisent les liaisons louées de l'opérateur OP. Chaque centre de supervision détecte notamment des signaux d'indication d'alarme SIAa et SIAb dans les liaisons louées qu'il supervise de manière à signaler des alarmes relatives à ces liaisons. Comme il est connu, un signal d'indication d'alarme SIAa, SIAb, SIAca, SIAcb est émis par un équipement terminal de traitement de données ETTDa, ETTDb à travers la jonction Ja, Jb et la ligne de télécommunication louée respective LTa et LTb, ou par un équipement de terminaison de circuit de données ETCDa, ETCDb à travers la ligne louée respective LTa, LTb, en direction du réseau RTC lorsque cet équipement est défaillant. Tous les signaux d'indication d'alarme SIAa, SIAb, SIAca et SIAcb sont identiques et composé d'une suite de bits "1".

Dans la figure 1, on a supposé que le centre de supervision CS surveillant la liaison entre les équipements terminaux ETTDa et ETTDb est placé en un point d'accès intermédiaire PI dans la liaison spécialisée ETTDa-ETTDb. Le centre de supervision CS comprend au moins un détecteur de signal d'indication d'alarme DI, un générateur de séquences GS et une unité de contrôle UC. Le détecteur DI détecte un signal d'indication d'alarme et le générateur GS génère des séquences de test dans la liaison surveillée suivant l'un ou l'autre sens de transmission Ua vers Ub, ou Ub vers Ua, à travers un circuit séparateur-mélangeur CSM au point d'accès intermédiaire PI sous la commande de l'unité de contrôle UC.

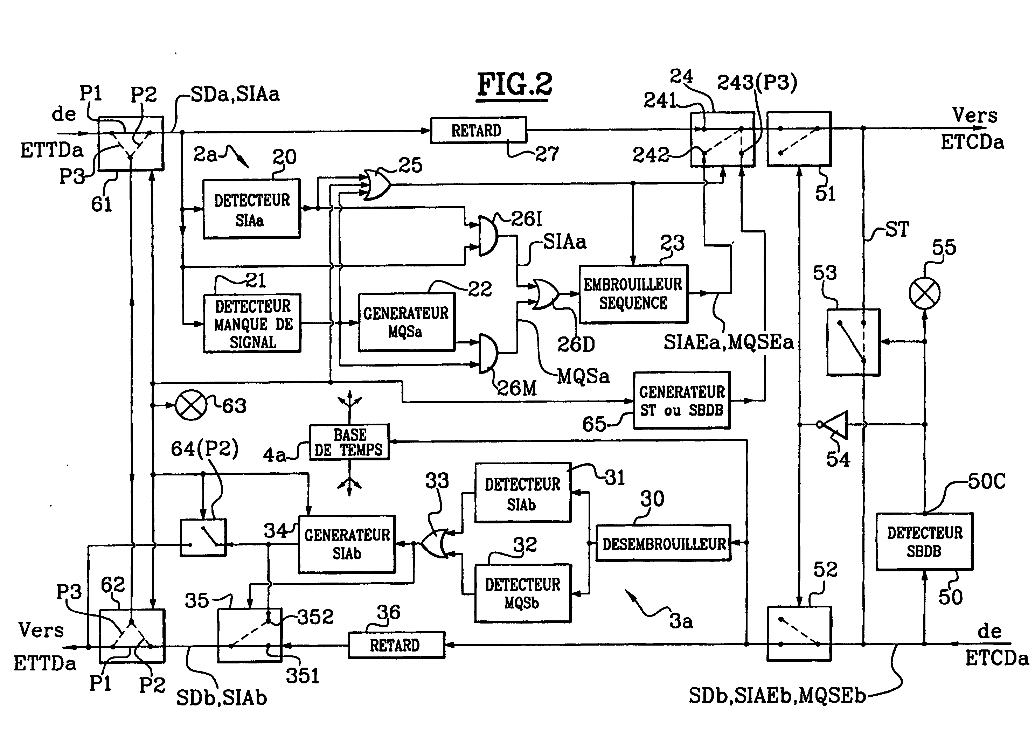

Comme montré à la figure 1, chaque jonction d'utilisateur Ja, Jb comprend un dispositif de discrimination de défauts 1a, 1b selon l'invention. Les dispositifs 1a et 1b étant identiques, seulement l'un d'eux 1a est décrit en détail ci-après en référence à la figure 2.

Le dispositif de discrimination de défauts 1a comprend un circuit d'émission 2a pour transmettre des signaux suivant le sens de l'équipement terminal ETTDa vers l'équipement de terminaison ETCDa, et un circuit de réception 3a pour transmettre des signaux suivant le sens opposé de l'équipement ETCDa vers l'équipement ETTDa. Une base de temps 4a récupère en entrée du circuit de réception 3a l'horloge bit dans un signal de données SDb reçu afin de fournir divers signaux d'horloge adéquats aux unités décrites ci-après, incluses dans les circuits 2a et 3a.

Le circuit d'émission 2a comprend essentiellement un détecteur de signal d'indication d'alarme 20, un détecteur de manque de signal 21, un générateur de séquence de manque de signal 22 commandé par le détecteur 21, un embrouilleur 23 commandé par les détecteurs 20 et 21, et un commutateur à trois positions stables 24 commandé par les détecteurs 20 et 21.

Les entrées des détecteurs 20 et 21 ainsi qu'une première entrée 241 du commutateur 24 sont reliées à la sortie de l'équipement terminal de traitement de données correspondant ETTDa à travers la jonction Ja.

Le premier détecteur 20 détecte un signal d'indication d'alarme SIAa émis par l'équipement terminal ETTDa dans la jonction Ja, lorsque cet équipement terminal est défaillant. En réponse au signal SIAa détecté, le détecteur 20 commande à travers une première entrée d'une porte OU 25 la réinitialisation et l'activation de l'embrouilleur 23 et le basculement de l'état normal 241 du commutateur 24 pour la transmission du signal de données SDa, comme montré en trait plein à la figure 2, à un état d'alarme reliant la sortie de l'embrouilleur 23 à l'entrée de l'équipement terminal de circuit de données correspondant ETCDa à travers une deuxième entrée 242 du commutateur 24. Egalement, tant que le signal SIAa est détecté, le détecteur 20 autorise l'ouverture d'une porte ET 26I pour appliquer le signal SIAa à travers une porte OU 26D à l'entrée de données de l'embrouilleur 23.

L'embrouilleur 23 comprend d'une manière connue un générateur générant des séquences binaires pseudo-aléatoires ayant une longueur prédéterminée par exemple de quelques centaines ou milliers de bit, en fonction d'un polynôme générateur prédéterminé, afin de remplacer le signal SIAa par une séquence d'indication d'alarme embrouillée SIAEa produite consécutivement et répétitivement par l'embrouilleur 23 et ne pouvant se retrouver dans tout signal numérique SDa, SIAa transmis depuis l'équipement terminal ETTDa. Comme cela est connu, le générateur pseudo-aléatoire est réinitialisé à un état binaire prédéterminé avant tout début de transmission de séquences successives, sous la commande de la porte OU 25. Des séquences embrouillées de signal d'indication d'alarme SIAEa sont ainsi transmises par l'embrouilleur 23 à travers le commutateur 24 vers l'équipement de terminaison ETCDa qui les retransmet vers le centre de supervision CS à travers la ligne LTa et le terminal numérique de ligne TNLa.

Dans le centre de supervision CS, l'invention y introduit un désembrouilleur DE correspondant à l'embrouilleur 23 qui désembrouille les séquences embrouillées SIAEa reçues à travers le circuit séparateur/mélangeur CSM, et un détecteur DID qui détecte le signal d'indication d'alarme désembrouillé SIAa et signale cette détection à l'unité de contrôle UC. L'unité de contrôle UC discrimine ainsi dans le sens de transmission depuis le tronçon d'utilisateur Ua et par suite prélocalise, au moyen des détecteurs DI et DID,
- un défaut provenant du deuxième tronçon OP de la liaison louée, c'est-à-dire un signal d'alarme non embrouillé SIAca émis par l'équipement de terminaison de circuit de données ETCDa lorsque celui-ci est défaillant, ou le cas échéant émis par un équipement, tel que le terminal TNLa, précédant le point d'accès intermédiaire PI, et
- un défaut provenant du premier tronçon Ua indiqué par un signal d'indication d'alarme SIAa émis par l'équipement terminal ETTDa et remplacé par la séquence d'indication d'alarme embrouillée SIAEa dans le dispositif de discrimination de défauts la, lorsque l'équipement terminal ETTDa est défaillant.

Le deuxième détecteur 21 dans le circuit d'émission 2a détecte un manque de signal dans la voie d'émission de la jonction Ja. Le manque de signal peut provenir de toute interruption brève ou durable de signal de données SDa ou de signal SIAa en entrée du circuit d'émission 2a, tel qu'un arrêt de fonctionnement de l'équipement terminal ETTDa, par exemple lorsque l'utilisateur éteint l'équipement terminal après sa journée de travail, ou un débranchement de l'équipement terminal et la jonction Jb, ou bien une coupure dans la voie d'émission de la jonction Ja, ou bien encore un défaut d'alimentation de l'équipement terminal ETTDa. En réponse à un manque de signal, le détecteur 21 commande la réinitialisation et l'activation de l'embrouilleur 23 et le basculement de l'état normal 241 à l'état d'alarme 242 du commutateur 24, à travers une deuxième entrée de la porte OU 25, et commande la génération d'une séquence de manque de signal MQSa par le générateur 22. La séquence MQSa est par exemple composée d'une suite alternée de m bits à un premier état binaire et q bits à un deuxième état binaire ; par exemple, lorsque les entiers m et q sont égaux à 1, la séquence MQSa est telle que "1010...10". Egalement en réponse au manque de signal, le détecteur 21 commande l'ouverture d'une porte ET 26M pour que le générateur 22 fournisse à travers la porte OU 26D la séquence MQSa à l'embrouilleur 23 qui génère des séquences de manque de signal embrouillées MQSEa transmises à travers la deuxième entrée 242 du commutateur 24 vers l'équipement de terminaison ETCDa. Comme les séquences embrouillées SIAEa, les séquences MQSEa sont différentes de séquences de même longueur contenues dans un signal SDa, SIAa transmis par l'équipement terminal ETTDa. Après désembrouillage dans le désembrouilleur DE du centre de supervision CS, un détecteur DMD détecte la séquence désembrouillée MQSa pour signaler à l'unité de contrôle UC et donc à l'opérateur qu'il existe un manque de signal au niveau de la jonction d'utilisateur Ja.

En réponse à un signal SIAa ou un manque de signal dans la jonction Ja, le détecteur respectif 20 ou 21 commande à travers la porte OU 25 l'initialisation de l'embrouilleur 23 afin que l'embrouilleur transmette toujours un même début de séquence embrouillée SIAEa ou MQSEa. L'embrouilleur 23, ou le générateur 22 et l'embrouilleur 23 fonctionnent tant que le signal SIAa ou le manque de signal est présent dans la jonction Ja, l'alarme cessant lorsque le défaut lui ayant donné naissance disparaît à la suite d'une opération de maintenance sur l'équipement défectueux correspondant.

Un circuit de retard 27 entre l'entrée du circuit d'émission 2a et la première entrée 241 du commutateur 24 retarde le signal de données SDa appliqué au commutateur 24 afin de compenser la durée de traitement dans les unités 20 à 23 lors de la détection d'un signal SIAa ou d'un manque de signal.

Le commutateur 24 ainsi que d'autres dans le dispositif la peuvent être à relais et deux états stables.

Le circuit de réception 3a sert à regénérer un signal d'indication d'alarme SIAb dans la voie de réception de la jonction Ja en direction de l'équipement terminal ETTDa lorsque le circuit d'émission 2b dans le dispositif de discrimination de défauts 1b à l'autre extrémité de la liaison a transmis des séquences d'indication d'alarme embrouillées SIAEb en réponse à un signal d'indication d'alarme SIAb émis par l'autre équipement terminal ETTDb, ou a transmis des séquences de manque de signal embrouillées MQSEb en réponse à un manque de signal dans l'autre jonction Jb.

Le circuit de réception 3a comprend essentiellement un désembrouilleur 30, un détecteur 31 détectant un signal d'indication d'alarme SIAb, un détecteur 32 détectant une séquence de manque de signal MQSb, un générateur 34 générant un signal d'indication d'alarme SIAb, un commutateur à deux positions stables 35, et un circuit de retard 36.

Une première entrée 351 du commutateur 35 et une entrée du désembrouilleur 30 sont reliées respectivement à travers le circuit de retard 36 et directement à la sortie de l'équipement de terminaison de circuit de données correspondant ETCDa située du côté de la jonction Ja. A l'état normal du commutateur 35, comme montré en trait plein à la figure 2, le signal de données SDb émis par l'équipement ETTDb, ou le cas échéant un signal d'indication d'alarme SIAcb émis par l'équipement de terminaison distant ETCDb lorsqu'il est défaillant, traverse le circuit de retard 36 et le commutateur 35 vers l'équipement terminal ETTDa.

Lorsqu'une séquence d'indication d'alarme embrouillée SIAEb ou une séquence de manque de signal embrouillée MQSEb est reçue à travers l'équipement de terminaison ETCDa, le désembrouilleur 30 la désembrouille en une séquence désembrouillée SIAb ou MQSb appliquée aux entrées des détecteurs 31 et 32.

Tant que des séquences d'indication d'alarme embrouillées SIAEb sont reçues, le détecteur 31 maintient à travers une porte OU 33 le commutateur 35 à l'état d'alarme en reliant une deuxième entrée 352 du commutateur 35 à la sortie du générateur 34 qui génère un signal d'indication d'alarme SIAb transmis à l'équipement ETTDa.

De manière analogue, le deuxième détecteur 32 dans le circuit de réception 3a commande à travers la porte OU 33 la transmission du signal d'indication d'alarme SIAb depuis le générateur 34 vers l'équipement terminal ETTDa à travers la deuxième entrée 352 du commutateur 35, tant qu'une séquence de manque de signal embrouillée MQSEb subsiste en sortie de l'équipement de terminaison ETCDa. Le circuit de retard 36 compense temporellement le traitement des séquences embrouillées et la génération du signal SIA dans les unités 30 à 34.

En variante, lorsque le détecteur 31 détecte le signal d'indication d'alarme désembrouillé SIAb, il commande l'ouverture d'une porte ET pour appliquer à travers celle-ci le signal détecté SIAb de la sortie du désembrouilleur 30 à la deuxième entrée 352 du commutateur 35. Dans cette variante, l'entrée du générateur 34 n'est reliée qu'à la sortie du détecteur 32.

Si le dispositif de discrimination la n'est plus alimenté, les commutateurs 24 et 35 demeurent à leur état précédant la panne d'alimentation, de manière à ne pas perturber les signaux qui étaient transmis dans la jonction Ja. En particulier, la transmission normale du signal de données SDa depuis l'équipement terminal ETTDa vers l'équipement de terminaison ETCDa à travers le circuit de retard 27 et le commutateur 24, et la transmission normale du signal de données SDb dans le sens inverse à travers le circuit de retard 36 et le commutateur 35 sont maintenues lorsqu'une panne d'alimentation survient. Puis si un signal d'indication d'alarme SIAa est transmis par l'équipement terminal ETTDa, celui-ci sera encore transmis à travers l'équipement de terminaison ETCDa, vers le centre de supervision CS, mais sans discrimination avec un signal d'indication d'alarme SIAca transmis par l'équipement de terminaison ETCDa, comme dans la technique antérieure. Toutefois, le détecteur DI détecte encore un signal d'indication d'alarme SIAa ou SIAca pour signaler un défaut à l'unité de contrôle UC.

Le dispositif de discrimination de défauts 1a comprend encore un détecteur de séquence de bouclage/débouclage 50 et trois interrupteurs 51, 52 et 53. Les interrupteurs 51 et 52 sont respectivement placés en sortie du circuit d'émission 2a et en entrée du circuit de réception 3a et sont commandés simultanément à travers un inverseur 54 par une sortie de commande 50C du détecteur 30. L'interrupteur 53, lorsqu'il est fermé, relie l'entrée du circuit de réception 3a avant l'interrupteur 52 à la sortie du circuit d'émission 2a après l'interrupteur 51. L'interrupteur 53 et un voyant de bouclage 55 sont commandés par la sortie de commande 50C du détecteur de séquence 50.

En fonctionnement normal, la sortie de commande 50C du détecteur 50 est à l'état "0", le voyant 54 est éteint, les interrupteurs 51 et 52 sont fermés et l'interrupteur de bouclage 53 est ouvert, comme montré en trait plein à la figure 2.

Afin que l'opérateur teste le deuxième tronçon OP de la liaison louée dont il est responsable, et particulièrement la partie de ce tronçon comprenant l'équipement de terminaison de circuit de données ETCDa et la ligne de télécommunication LTa, une séquence de localisation SBDB est transmise par le générateur de séquences GS dans le centre de supervision CS à travers les équipements correspondants de la liaison louée et l'équipement de terminaison ETCDa. Dès que la séquence SBDB est détectée dans le détecteur 50, la sortie de commande 50C passe à l'état "1", ce qui ouvre les interrupteurs 51 et 52 pour isoler l'équipement terminal ETTDa et la jonction Ja du deuxième tronçon OP, et ferme l'interrupteur de boucle 53 et allume le voyant 55 afin de boucler la sortie de l'équipement de terminaison ETCDa à l'entrée de celui-ci située du côté de la jonction Ja. Puis une séquence de test ST est transmise par le générateur GS en direction de l'équipement de terminaison ETCDa, traverse l'interrupteur 53 et est renvoyée vers le centre de supervision CS dans lequel un détecteur DST analyse la séquence renvoyée ST et l'unité de contrôle UC mesure un taux d'erreur afin de confirmer qu'une alarme détectée précédemment sous la forme d'un signal d'indication d'alarme SIAca corresponde bien à un défaut dans le tronçon de liaison depuis l'équipement de terminaison ETCDa vers le réseau RT, qui est sous la responsabilité de l'opérateur OP. La séquence de test ST est par exemple une séquence pseudo-aléatoire à 2¹⁵-1 bits. Puis après le test, et éventuellement réparation d'un équipement défaillant, une autre séquence de bouclage/débouclage SBDB est envoyée par le générateur GS et est détectée par le détecteur 50 dans le dispositif la afin que celui-ci ferme les interrupteurs 51 et 52 et ouvre l'interrupteur 53 pour le passage normal de signaux de données SDa et SDb.

En variante, la séquence de bouclage/débouclage SBDB et la séquence de test ST sont confondues en une séquence ST. Dans cette variante, le détecteur de séquence 50 possède une mémoire tampon RAM afin d'y écrire la séquence ST en même temps qu'elle est détectée et d'y lire la séquence détectée ST après que les interrupteurs 51 et 52 soient ouverts et l'interrupteur 53 soit fermé pour réinjecter la séquence ST vers le centre de supervision CS qui mesure alors un taux d'erreur. Une autre séquence ST provoque ensuite le débouclage dans le dispositif 1a.

Le dispositif de discrimination de défauts 1a comprend encore deux interrupteurs commandés simultanément localement 61 et 62 et un voyant 63 pour procéder à des bouclages commandés localement in situ chez l'utilisateur. Les interrupteurs 61 et 62 ont chacun trois positions P1, P2 et P3 et sont respectivement situés en entrée du circuit d'émission 2a ou en sortie du circuit de réception 3a. Le dispositif la comprend également un interrupteur 64 entre la sortie du générateur de séquence d'indication d'alarme 34 et la sortie du circuit de réception 3a devant l'interrupteur 62, et un générateur de séquences 65 relié à une troisième entrée 243 du commutateur 24.

A la position normale P1, illustrée en trait plein à la figure 2, les interrupteurs 61 et 62 relient respectivement la sortie et l'entrée de l'équipement terminal ETTDa à l'entrée du circuit d'émission 2a et à la sortie du circuit de réception 3a pour laisser passer normalement les signaux de données SDa et SDb. Le voyant 63 demeure éteint.

A la première position de bouclage P2, les interrupteurs 61 et 62 relient la sortie de circuit de réception 3a après le commutateur 35 à l'entrée du circuit d'émission 2a avant les entrées des détecteurs 20 et 21 et du circuit de retard 27. L'extrémité de la ligne de télécommunication LTa dans le dispositif 1a est ainsi bouclée ce qui est signalé par un allumage continu du voyant 63. Une séquence de test identique ou différente des séquences SBDB et ST est ensuite transmise par le générateur GS. Du côté de la jonction Ja non bouclée, un signal d'indication d'alarme SIAb est transmis depuis le générateur 34 vers l'équipement terminal ETTDa, à travers l'interrupteur 64 commandé en fermeture localement en correspondance avec la position P2 des interrupteurs 61 et 62, pour indiquer à l'équipement ETTDa que la liaison n'est plus disponible.

A la deuxième position de bouclage P3, les interrupteurs 61 et 62 relient l'extrémité de la voie d'émission de la jonction Ja située du côté de l'entrée du circuit d'émission 2a à l'extrémité de la voie de réception de la jonction Ja située du côté de la sortie du circuit de réception 3a. L'entrée et la sortie de l'équipement ETTDa sont ainsi bouclées à travers la jonction Ja devant le dispositif la ce qui est signalé par un clignotement du voyant 63. Cette boucle dans le tronçon d'utilisateur Ua peut être ensuite testée depuis l'équipement terminal ETTDa. Du côté de la ligne de télécommunication LTa non bouclée, le générateur de séquences 65 émet une séquence de bouclage SBDB, ou en variante une séquence de test ST, afin que le détecteur 50 dans le dispositif 1b boucle la ligne LTb par fermeture de l'interrupteur 53 dans le dispositif 1b, indiquant ainsi à l'équipement distant ETTDb l'indisponibilité de la liaison et au centre de supervision CS l'état de maintenance.

Le dispositif de discrimination de défauts la a été illustré suivant une réalisation préférée de l'invention. D'autres réalisations peuvent être envisagées à partir de cette réalisation illustrée. Par exemple, le détecteur de manque de signal 21 peut être complété par un détecteur d'autres anomalies dans la voie d'émission de la jonction Ja qui ne sont pas susceptibles d'être détectées par l'équipement de terminaison ETCDa et qui engendrent l'émission d'une séquence particulière générée par un générateur autre que le générateur 22 et embrouillée par l'embrouilleur 23 ; dans cette réalisation, un détecteur autre que le détecteur 32 est prévu en parallèle avec les détecteurs 31 et 32 pour détecter la séquence particulière désembrouillée par le désembrouilleur 30. Selon une autre réalisation, les interrupteurs 51, 52 et 53 qui sont du type à relais ou bien à transistors à faible consommation de courant, comme les commutateurs 61 et 62, sont situés à d'autres emplacements dans le dispositif la, par exemple respectivement situées du côté de la jonction Ja et du côté de la ligne LTa, ou tous du même côté.

## Revendications

1. Dispositif pour discriminer des défauts de fonctionnement qui sont signalés respectivement par des signaux d'indication d'alarme identiques (SIAa, SIAca) transmis dans une ligne de télécommunication (LTa) depuis un premier équipement (ETTDa) à travers un deuxième équipement (ETCDa) et depuis le deuxième équipement (ETCDa) connecté à la ligne de télécommunication, **caractérisé en ce que** le dispositif (1a) est interconnecté entre le premier équipement (ETTDa) et le deuxième équipement (ETCDa) et comprend un moyen (20, 23, 24) pour remplacer le signal d'indication d'alarme (SIAa) transmis depuis le premier équipement (ETTDa) par un signal d'alarme (SIAEa) qui est différent du signal d'indication d'alarme et d'un signal de données (SDa, SIAa) transmis également par le premier équipement (ETTDa) et qui est transmis dans la ligne de télécommunication (LTa) à travers le deuxième équipement (ETCDa).

2. Dispositif conforme à la revendication 1, dans lequel le moyen pour remplacer comprend un détecteur (20) pour détecter le signal d'indication d'alarme (SIAa) transmis depuis le premier équipement (ETTDa), un embrouilleur (23) pour embrouiller le signal d'indication d'alarme détecté en des séquences d'indication d'alarme embrouillées (SIAEa) constituant le signal d'alarme, et un moyen de commutation (24) commandé par le détecteur (20) ayant un premier état (241) à travers lequel un signal de données (SDa) est transmis par le premier équipement (ETTDa) vers le deuxième équipement (ETCDa) et un deuxième état (242) à travers lequel les séquences d'indication d'alarme embrouillées (SIAEa) sont transmises par l'embrouilleur (23) vers le deuxième équipement (ETCDa) tant que le signal d'indication d'alarme (SIAa) est détecté.

3. Dispositif conforme à la revendication 1 ou 2, comprenant un moyen (21, 22, 23, 24) pour transmettre vers la ligne de télécommunication (LTa) à travers le deuxième équipement (ETCDa) un signal de manque de signal (MQSEa) qui ne se retrouve pas dans le signal (SDa, SIAa), tant qu'il y a un manque de signal en sortie (Ja) du premier équipement (ETTDa).

4. Dispositif conforme à la revendication 3 lorsqu'elle dépend de la revendication 2, dans lequel le moyen pour transmettre comprend un deuxième détecteur (21) pour détecter un manque de signal en sortie (Ja) du premier équipement (ETTDa), et un générateur (22) pour générer des séquences de manque de signal (MQSa) qui sont embrouillées par l'embrouilleur (23) en des séquences de manque de signal embrouillées (MQSEa) transmises vers le deuxième équipement (ETCDa) à travers le moyen de commutation (24) audit deuxième état (242) tant que le manque de signal est détecté.

5. Dispositif conforme à l'une quelconque des revendications 1 à 4, comprenant un deuxième moyen (30, 31, 34, 35) pour remplacer un deuxième signal d'alarme (SIAEb) reçu au moins à travers la ligne de télécommunication (LTa) et le deuxième équipement (ETCDa) par un deuxième signal d'indication d'alarme (SIAb) transmis au premier équipement (ETTDa).

6. Dispositif conforme à la revendication 5, dans lequel le deuxième moyen pour remplacer comprend un désembrouilleur (30) pour désembrouiller des deuxièmes séquences d'indication d'alarme embrouillées (SIAEb) constituant le deuxième signal d'alarme en un deuxième signal d'indication d'alarme (SIAb), un troisième détecteur (31) pour détecter le deuxième signal d'indication d'alarme, et un deuxième moyen de commutation (35) commandé par le troisième détecteur (31) ayant un premier état (351) à travers lequel un signal de données (SDb) reçu au moins à travers la ligne de télécommunication (LTa) et le deuxième équipement (ETCDa) est transmis vers le premier équipement (ETTDa) et un deuxième état (352) à travers lequel le deuxième signal d'indication d'alarme détecté (SIAb) est transmis vers le premier équipement (ETTDa), ou à travers lequel le deuxième signal d'indication (SIAb) reproduit dans un générateur de signal d'indication d'alarme (34) est transmis vers le premier équipement, tant que le deuxième signal d'indication d'alarme est détecté.

7. Dispositif conforme à l'une quelconque des revendications 1 à 6, comprenant un troisième moyen (30, 32, 34, 35) pour remplacer un deuxième signal de manque de signal (MQSEb) reçu au moins à travers depuis la ligne de télécommunication (LTa) et le deuxième équipement (ETCDa) par un deuxième signal d'indication d'alarme (SIAb) transmis au premier équipement (ETTDa).

8. Dispositif conforme à la revendication 7 lorsqu'elle dépend de la revendication 6, dans lequel le troisième moyen pour remplacer comprend un quatrième détecteur (32) pour détecter des deuxièmes séquences de manque de signal (MQSb) produites par le désembrouilleur (30) en réponse à des deuxièmes séquences de manque de signal embrouillées (MQSEb) constituant le deuxième signal de manque de signal, et un générateur (34) pour générer le deuxième signal d'indication d'alarme (SIAb) transmis vers le premier équipement (ETTDa) à travers le deuxième moyen de commutation (35) audit deuxième état tant que des deuxièmes séquences de manque de signal (MQSb) sont détectées.

9. Dispositif conforme à la revendication 4, ou à la revendication 7, dans lequel chaque séquence de manque de signal (MQSa ; MQSb) comprend une suite alternée de bits à un premier état en nombre prédéterminé et de bits à un deuxième état en nombre prédéterminé.

10. Dispositif conforme à l'une quelconque des revendications 1 à 9, pour lequel le premier équipement est un équipement terminal de traitement de données (ETTDa), le deuxième équipement est un équipement de terminaison de circuit de données (ETCDa), et la ligne de télécommunication est une ligne de transmission numérique (LTa).

11. Dispositif conforme à l'une quelconque des revendications 1 à 10, comprenant un moyen (50) pour détecter une séquence prédéterminée (SBDB, ST) reçue depuis la sortie du deuxième équipement (ETCDa), et un moyen (51, 52, 53) pour boucler la sortie et l'entrée du deuxième équipement (ETCDa) en réponse à la séquence prédéterminée détectée.

12. Dispositif conforme à l'une quelconque des revendications 1 à 11, comprenant un moyen de bouclage (61, 62) pour boucler soit la sortie et l'entrée du deuxième équipement (ETCDa), soit la sortie et l'entrée du premier équipement (ETTDa).

13. Dispositif conforme à la revendication 12, comprenant un moyen (34, 64) pour générer un deuxième signal d'indication d'alarme (SIAb) transmis vers le premier équipement (ETTDa) lorsque le moyen de bouclage (61, 62) boucle la sortie et l'entrée du deuxième équipement (ETCDa).

14. Dispositif conforme à la revendication 12 ou 13, comprenant un moyen (65, 243) pour générer une séquence prédéterminée (ST, SBDB) dans la ligne de télécommunication (LTa) à travers le deuxième équipement (ETCDa) lorsque le moyen de bouclage (61, 62) boucle la sortie et l'entrée du premier équipement (ETTDa).

15. Centre de supervision (CS) pour superviser une ligne de télécommunication (LTa) équipée d'un dispositif (1a) interconnecté entre un premier équipement (ETTDa) et un deuxième équipement (ETCDa) connecté à la ligne de télécommunication pour discriminer des défauts de fonctionnement conforme à l'une quelconque des revendications 1 à 14, **caractérisé en ce qu'**il comprend un premier moyen (DI) pour détecter un signal d'indication d'alarme (SIAca) susceptible d'être transmis depuis le deuxième équipement (ETCDa), et un deuxième moyen (DE, DID) pour détecter un signal d'alarme (SIAEa) différent du signal d'indication d'alarme et transmis par ledit dispositif (1a) en remplacement d'un signal d'indication d'alarme (SIAa) transmis depuis le premier équipement (ETTDa).

16. Centre de supervision conforme à la revendication 15, dans lequel le deuxième moyen pour détecter comprend un désembrouilleur (DE) pour désembrouiller tout signal reçu de la ligne de télécommunication (LTa) en un signal désembrouillé, et un détecteur (DID) pour détecter un signal d'indication d'alarme (SIAa) dans le signal désembrouillé.

17. Centre de supervision conforme à la revendication 15 ou 16, comprenant un moyen (DE, DMD) pour détecter un signal de manque de signal (MQSEa) transmis par ledit dispositif (1a) tant qu'il y a un manque de signal en sortie (Ja) du premier équipement (ETTDa).

18. Centre de supervision conforme à la revendication 16, comprenant un deuxième détecteur (DMD) pour détecter dans le signal désembrouillé des séquences de manque de signal (MQSa) générées et embrouillées dans ledit dispositif (1a) tant qu'il y a un manque de signal en sortie (Ja) du premier équipement (ETTDa).

## Patentansprüche

1. Gerät zur Unterscheidung von Funktionsfehlern, die jeweils durch identische Alarmindikationssignale (SIAa, SIAca) signalisiert werden, welche mittels einer Telekommunikationsleitung (LTa) von einer ersten Einrichtung (ETTDa) über eine zweite Einrichtung (ETCDa) und von der an die Telekommunikationsleitung angeschlossenen zweiten Einrichtung (ETCDa) gesendet werden, das **dadurch gekennzeichnet ist, dass** das Gerät (1a) zwischen die erste Einrichtung (ETTDa) und die zweite Einrichtung (ETCDa) geschaltet ist und eine Vorrichtung (20, 23, 24) umfasst, mit deren Hilfe das von der ersten Einrichtung (ETTDa) gesendete Alarmindikationssignal (SIAa) durch ein Alarmsignal (SIAEa) ersetzt wird, das anders ist als das ebenfalls durch die erste Einrichtung (ETTDa) übertragene Alarmindikationssignal und Datensignal (SDa, SIAa) und das mittels der Telekommunikationsleitung (LTa) über die zweite Einrichtung (ETCDa) gesendet wird.

2. Gerät gemäß Patentanspruch 1, bei dem die Vorrichtung zum Ersetzen über einen Detektor (20) zum Erkennen des von der ersten Einrichtung (ETTDa) gesendeten Alarmindikationssignals (SIAa), einen Scrambler (23) zum Scramblen des erkannten Alarmindikationssignals in verscrambelte Indikationsalarmsequenzen (SIAEa), die das Alarmsignal bilden, und eine durch den Detektor (20) gesteuerte Schaltvorrichtung (24) umfasst, die eine erste Schaltstellung (241) hat, über die ein Datensignal (SDa) durch die erste Einrichtung (ETTDa) an die zweite Einrichtung (ETCDa) gesendet wird, und eine zweite Schaltstellung (242), über die die verscrambelten Indikationsalarmsequenzen (SIAEa) durch den Scrambler (23) an die zweite Einrichtung (ETCDa) gesendet werden, solange das Alarmindikationssignal (SIAa) erkannt wird.

3. Gerät gemäß Patentanspruch 1 oder 2, das eine Vorrichtung (21, 22, 23, 24) umfasst, mit deren Hilfe über die zweite Einrichtung (ETCDa) ein Signalausfallsignal (MQSEa) zu der Telekommunikationsleitung (LTa) gesendet wird, das sich nicht in dem Signal (SDa, SIAa) wiederfindet, solange am Ausgang (Ja) der ersten Einrichtung (ETTDa) ein Signalausfall vorliegt.

4. Gerät gemäß Patentanspruch 3, wenn dieser von Patentanspruch 2 abhängt, bei dem die Vorrichtung zum Senden einen zweiten Detektor (21) zum Erkennen eines Signalausfalls am Ausgang (Ja) der ersten Einrichtung (ETTDa) und einen Generator (22) zum Erzeugen von Signalsausfallsequenzen (MQSa) umfasst, die durch den Scrambler 23) in verscrambelte Signalausfallsequenzen (MQSEa) verscrambelt werden, welche über die Schaltvorrichtung (24) in besagter Schaltstellung (242) an die zweite Einrichtung (ETCDa) gesendet werden, solange der Signalausfall erkannt wird.

5. Gerät gemäß einem der Patentansprüche 1 bis 4, das eine zweite Vorrichtung (30, 31, 34, 35) zum Ersetzen eines zweiten Alarmsignals (SIAEb) umfasst, welches mindestens über die Telekommunikationsleitung (LTa) und die zweite Einrichtung (ETCDa) empfangen wird, durch ein zweites Alarmindikationssignal (SIAb), welches an die erste Einrichtung (ETTDa) gesendet wird.

6. Gerät gemäß Patentanspruch 5, bei dem die zweite Einrichtung zum Ersetzen einen Descrambler (30) zum Descramblen der das zweite Alarmsignal bildenden zweiten Alarmindikationssequenzen (SIAEb) in ein zweites Alarmindikationssignal (SIAb), einen dritten Detektor (31) zum Erkennen des zweiten Alarmindikationssignals und eine zweite Schaltvorrichtung umfasst, welche durch den dritten Detektor (31) gesteuert wird und eine erste Schaltstellung (351) hat, über die ein Datensignal (SDb), welches mindestens über die Telekommunikationsleitung (LTa) und die zweite Einrichtung (ETCDa) empfangen wird, an die erste Einrichtung (ETTDa) gesendet wird, und eine zweite Schaltstellung (352), über die das erkannte zweite Alarmindikationssignal (SIAb) an die erste Einrichtung (ETTDa) gesendet wird oder über die das zweite Indikationssignal (SIAb), welches in einem Alarmindikationssignalgenerator (34) reproduziert wird, an die erste Einrichtung gesendet wird, solange das zweite Alarmindikationssignal erkannt wird.

7. Gerät gemäß einem der Patentansprüche 1 bis 6, das eine dritte Vorrichtung (30, 32, 34, 35) zum Ersetzen eines zweiten Signalausfallsignals (MQSEb) umfasst, welches mindestens über die Telekommunikationsleitung (LTa) und die zweite Einrichtung (ETCDa) empfangen wird, durch ein zweites Alarmindikationssignal (SIAb), welches an die erste Einrichtung (ETTDa) gesendet wird.

8. Gerät gemäß Patentanspruch 7, wenn dieser von Patentanspruch 6 abhängt, bei dem die dritte Vorrichtung zum Ersetzen einen vierten Detektor (32) zum Erkennen von zweiten Signalausfallsequenzen (MQSb), welche durch den Descrambler (30) in Antwort auf zweite verscrambelte Signalsausfallsequenzen (MQSEb) erzeugt werden, die das zweite Signalsausfallsignal bilden, und einen Generator (34) zum Erzeugen des zweiten Alarmindikationssignals (SIAb) umfasst, welches über die zweite Schaltvorrichtung (35) in besagter zweiter Schaltstellung an die erste Einrichtung (ETTDa) gesendet wird, solange zweite Signalausfallsequenzen (MQSb) erkannt werden.

9. Gerät gemäß Patentanspruch 5 oder gemäß Patentanspruch 7, bei dem jede Signalausfallsequenz (MQSa; MQSb) eine alternierende Reihe von Bits in einem ersten Zustand in einer festgelegten Menge und von Bits in einem zweiten Zustand in einer festgelegten Menge umfasst.

10. Gerät gemäß einem der Patentansprüche 1 bis 9, bei dem die erste Einrichtung eine Datenendeinrichtung (ETTDa), die zweite Einrichtung eine Datenübertragungseinrichtung (ETCDa) und die Telekommunikationsleitung eine digitale Übertragungsleitung (LTa) ist.

11. Gerät gemäß einem der Patentansprüche 1 bis 10, das eine Vorrichtung (50) zum Erkennen einer festgelegten Sequenz (SBDB, ST), welche vom Ausgang der zweiten Einrichtung (ETCDa) empfangen wird, und eine Vorrichtung (51, 52, 53) zum Durchschleifen des Ausgangs und des Eingangs der zweiten Einrichtung (ETCDa) in Antwort auf die erkannte festgelegte Sequenz umfasst.

12. Gerät gemäß einem der Patentansprüche 1 bis 11, das eine Durchschleifvorrichtung (61, 62) zum Schleifen entweder des Ausgangs und des Eingangs der zweiten Einrichtung (ETCDa) oder des Ausgangs und des Eingangs der ersten Einrichtung (ETTDa) umfasst.

13. Gerät gemäß Patentanspruch 12, das eine Vorrichtung (34, 64) zum Erzeugen eines zweiten Alarmindikationssignals (SIAb) umfasst, welches an die erste Einrichtung (ETTDa) gesendet wird, wenn die Durchschleifvorrichtung (61, 62) den Ausgang und den Eingang der zweiten Einrichtung (ETCDa) durchschleift.

14. Gerät gemäß Patentanspruch 12 oder 13, das eine Vorrichtung (65, 243) zum Erzeugen einer festgelegten Sequenz (ST, SBDB) in der Telekommunikationsleitung (LTa) über die zweite Einrichtung (ETCDa) umfasst, wenn die Durchschleifvorrichtung (61, 62) den Ausgang und den Eingang der ersten Einrichtung (ETCDa) durchschleift.

15. Überwachungszentrum (CS) zum Überwachen einer Telekommunikationsleitung (LTa), ausgestattet mit einem Gerät (1a) zum Erkennen von Funktionsfehlern, geschaltet zwischen eine erste Einrichtung (ETTDa) und eine an die Telekommunikationsleitung angeschlossene zweite Einrichtung (ETCDa), gemäß einem der Patentansprüche 1 bis 14, die **dadurch gekennzeichnet ist, dass** sie eine erste Vorrichtung (DI) zum Erkennen eines Alarmindikationssignals (SIAca), das von einer zweiten Einrichtung (ETCDa) gesendet werden kann, und eine zweite Vorrichtung (DE, DID) zum Erkennen eines Alarmsignals (SIAEa) umfasst, das anders ist als das Alarmindikationssignal und von besagtem Gerät (1a) als Ersatz für ein von der ersten Einrichtung (ETTDa) gesendetes Alarmindikationssignal (SIAa) gesendet wird.

16. Überwachungszentrum gemäß Patentanspruch 15, bei dem die zweite Vorrichtung zum Erkennen einen Descrambler (DE) zum Descramblen sämtlicher von der Telekommunikationsleitung (LTa) empfangener Signale in ein descrambeltes Signal und einen Detektor (DID) zum Erkennen eines Alarmindikationssignals (SIAa) in dem descrambelten Signal umfasst.

17. Überwachungszentrum gemäß Patentanspruch 15 oder 16, das eine Vorrichtung (DE, DMD) zum Erkennen eines Signalausfallsignals (MQSEa) umfasst, das durch besagtes Gerät (1a) gesendet wird, solange ein Signalausfall am Ausgang (Ja) der ersten Einrichtung (ETTDa) vorliegt.

18. Überwachungszentrum gemäß Patentanspruch 16, das einen zweiten Detektor (DMD) zum Erkennen von Signalausfallsequenzen (MQSa) in dem descrambelten Signal umfasst, die in besagtem Gerät (1a) erzeugt und verscrambelt werden, solange ein Signalausfall am Ausgang (Ja) der ersten Einrichtung

## Claims

1. A device for discriminating operating faults which are indicated respectively by identical alarm indicating signals (SIAa, SIAca) transmitted along a telecommunications line (LTa) from first equipment (ETTDa) via second equipment (ETCDa) and from the second equipment (ETCDa) connected to the telecommunications line, **characterised in that** the device (1a) is interconnected between the first equipment (ETTDa) and the second equipment (ETCDa) and comprises means (20, 23, 24) for replacing the alarm indicating signal (SIAa) transmitted from the first equipment (ETTDa) with an alarm signal (SIAEa) which is different from the alarm indicating signal and from a data signal (SDa, SIAa) also transmitted by the first equipment (ETTDa) and which is transmitted along the telecommunications line (LTa) via the second equipment (ETCDa).

2. Device according to claim 1, wherein the replacing means comprise a detector (20) for detecting the alarm indicating signal (SIAa) transmitted from the first equipment (ETTDa), a scrambler (23) for scrambling the alarm indicating signal detected into scrambled alarm indicating sequences (SIAEa) constituting the alarm signal, and switching means (24) controlled by the detector (20) having a first state (241) through which a data signal (SDa) is transmitted by the first equipment (ETTDa) to the second equipment (ETCDa) and a second state (242) through which the scrambled alarm indicating sequences (SIAEa) are transmitted by the scrambler (23) to the second equipment (ETCDa) whenever the alarm indicating signal (SIAa) is detected.

3. Device according to claim 1 or 2, comprising means (21, 22, 23, 24) for transmitting, to the telecommunications line (LTa) via the second equipment (ETCDa), a signal indicating absence of signal (MQSEa) which is not found in the signal (SDa, SIAa), whenever there is a lack of signal at the output (Ja) of the first equipment (ETTDa).

4. Device according to claim 3, when dependent on claim 2, wherein the transmitting means comprise a second detector (21) for detecting a lack of signal at the output (Ja) of the first equipment (ETTDa), and a generator (22) for generating lack of signal sequences (MQSa) which are scrambled by the scrambler (23) into scrambled lack of signal sequences (MQSEa) transmitted to the second equipment (ETCDa) via the switching means (24) in the second state (242) whenever the lack of signal is detected.

5. Device according to any one of claims 1 to 4, comprising second means (30, 31, 34, 35) for replacing a second alarm signal (SIAEb) received at least through the telecommunications line (LTa) and the second equipment (ETCDa) by a second alarm indicating signal (SIAb) transmitted to the first equipment (ETTDa).

6. Apparatus according to claim 5, wherein the second replacement means comprise an unscrambler (30) for unscrambling second scrambled alarm indicating sequences (SIAEb) constituting the second alarm signal into a second alarm indicating signal (SIAb), a third detector (31) for detecting the second alarm indicating signal, and second switching means (35) controlled by the third detector (31) having a first state (351) through which a data signal (SDb) received at least through the telecommunications line (LTa) and the second equipment (ETCDa) is transmitted to the first equipment (ETTDa) and a second state (352) through which the second detected alarm indicating signal (SIAb) is transmitted to the first equipment (ETTDa), or through which the second indicating signal (SIAb) reproduced in an alarm indicating signal generator (34) is transmitted to the first equipment, whenever the second alarm indicating signal is detected.

7. Device according to any one of claims 1 to 6, comprising third means (30, 32, 34, 35) for replacing a second signal indicating a lack of signal (MQSEb) received at least from the telecommunications lines (LTa) and the second equipment (ETCDa) with a second alarm indicating signal (SIAb) transmitted to the first equipment (ETTDa).

8. Device according to claim 7 when dependent on claim 6, wherein the third replacement means comprise a fourth detector (32) for detecting the second lack of signal sequences (MQSb) produced by the unscrambler (30) in response to the second scrambled lack of signal sequences (MQSEb) constituting the second signal indicating a lack of signal, and a generator (34) for generating the second alarm indicating signal (SIAb) transmitted to the first equipment (ETTDa) through the second switching means (35) in said second state whenever the second lack of signal sequences (MQSb) are detected.

9. Device according to claim 4, or claim 7, wherein each lack of signal sequence (MQSa, MQSb) comprises an alternate series of bits in a first state in a pre-determined number and bits in a second state in a pre-determined number.

10. Device according to any one of claims 1 to 9, wherein the first equipment is a data processing terminal equipment (ETTDa), the second equipment is a data circuit terminating equipment (ETCDa) and the telecommunications line is a digital transmission line (LTa).

11. Device according to any one of claims 1 to 10, comprising means (50) for detecting a pre-determined sequence (SBDB, ST) received from the output of the second equipment (ETCDa), and means (51, 52, 53) for looping the output and input of the second equipment (ETCDa) in response to a pre-determined sequence detected.

12. Device according to any one of claims 1 to 11, comprising ring connecting means (61, 62) for ring-connecting either the output and input of the second equipment (ETCDa) or the output and input of the first equipment (ETTDa).

13. Device according to claim 12, comprising means (34, 64) for generating a second alarm indicating signal (SIAb) transmitted to the first equipment (ETTDa) when the looping means (61, 62) connects the output and input of the second equipment (ETCDa).

14. Device according to claim 12 or 13, comprising means (65, 243) for generating a pre-determined sequence (ST, SBDB) in the telecommunications line (LTa) through the second equipment (ETCDa) when the ring connecting means (61, 62) connect the output and input of the first equipment (ETTDa).

15. Monitoring centre (CS) for monitoring a telecommunications line (LTa) equipped with a device (1a) interconnected between a first equipment (ETTDa) and a second equipment (ETCDa) connected to the telecommunications line for discriminating operational faults in accordance with any one of claims 1 to 14, **characterised in that** it comprises first means (DI) for detecting an alarm indicating signal (SIAca) capable of being transmitted from the first equipment (ETCDa), and second means (DE, DID) for detecting an alarm signal (SIAea) different from the alarm indicating signal and transmitted by said device (1a) as a replacement for an alarm indicating signal (SIAa) transmitted from the first equipment (ETTDa).

16. Monitoring centre according to claim 15, wherein the second detecting means comprise an unscrambler (DE) for unscrambling any signal received from the telecommunications line (LTa) into an unscrambled signal, and a detector (DID) for detecting an alarm indicating signal (SIAa) in the unscrambled signal.

17. Monitoring centre according to claims 15 or 16, comprising means (DE, DMD) for detecting a signal indicating a lack of signal (MQSEa) transmitted by said device (1a) when there is an absence of signal at the output (Ja) of the first equipment (ETTDa).

18. Monitoring centre according to claim 16, comprising a second detector (DMD) for detecting in the unscrambled signal lack of signal sequences (MQSa) generated and scrambled in said device (1a) whenever there is a lack of signal at the output (Ja) of the first equipment (ETTDa).
